# EUROPEAN PATENT APPLICATION

(11) **EP 2 104 286 A1**
(43) Date of publication of application: **23.09.2009**
(21) Application number: 08715232.8
(22) Date of filing: 13.03.2008
(51) Int. Cl.: H04L 12/56

(54) **DATA COMMUNICATION SYSTEM, SWITCHING NETWORK BOARD AND METHOD**

(30) Priority: 29.06.2007 CN 200710076307
(71) Applicant: Huawei Technologies Co., Ltd., Longgang District, Shenzhen Guangdong 518129 (CN)
(72) Inventor: ZANG, Dajun, Shenzhen Guangdong 518129 (CN); ZHOU, Da, Shenzhen Guangdong 518129 (CN); FAN, Lingqiang, Shenzhen Guangdong 518129 (CN); YE, Jinhua, Shenzhen Guangdong 518129 (CN); YANG, Dongcheng, Shenzhen Guangdong 518129 (CN); GAI, Gang, Shenzhen Guangdong 518129 (CN); WANG, Ziqiang, Shenzhen Guangdong 518129 (CN)
(74) Representative: Thun, Clemens
(86) International application number: PCT/CN2008/070496
(87) International publication number: WO 2009/003374

(57) **Abstract**

A method and system of data communication, switching network board are disclosed. The data communication system includes multiple line card chassis, each including multiple line cards, at least one switching chip and at least one relay chip. The line card is respectively connected to the switching chip and the relay chip of the same line card chassis. The switching chip of one line card chassis is connected to the relay chip of at least one of other line card chassis. The relay chip of the one line card chassis is connected to the switching chip of the at least one of other line card chassis. The switching network board includes a switching chip and a relay chip. By implementing the above embodiments, the networking complexity is reduced, the networking cost is saved and the system reliability is enhanced in the case that a few line card chassis are cascaded.

## Description

### FIELD OF THE TECHNOLOGY

The present invention relates to a switching technology in the data communication field, and more particularly, to a method and system of data communication, switching network board for multiple chassis (line card chassis).

### BACKGROUND

An IP network device system mainly includes two planes: a data forwarding plane and a routing controlling plane. The routing controlling plane provides functions such as processing a routing protocol, generating a routing table and forwarding table, and provides a management interface to the outside. The data forwarding plane provides real-time processing functions such as data packet receiving, table checking, classifying, filtering, QoS processing, and switching. Therefore, the design of the data forwarding plane is critical to realizing support for multiple services while maintaining the line-rate forwarding on a high-speed interface.

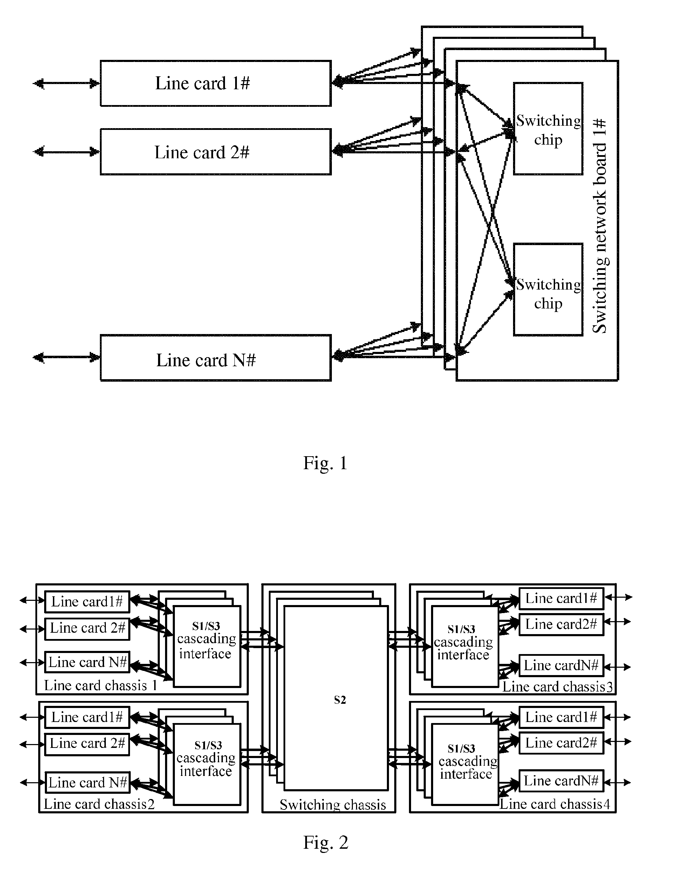

Figure 1 is a structural schematic view illustrating the data forwarding plane in the prior art. The data forwarding plane is constituted of several (N is larger than or equal to 1) line processing cards (hereinafter called a line card for short) and several (4 as shown in the Figure) switching network boards. There are several switching chips on each of the switching network boards. Each of the switching network boards may realize a full connection of all the line cards. The line card is an interface card between an access device and a switch, a router or the access of other network devices. The line card is responsible for the processing with respect to interfaces and protocols and sending received data packets to the switching network board. During forwarding the data, all the line cards send the received data packets to a switching chip on the different switching network boards according to a load balancing principle and send the data packets to a destination line card by the switching chip.

With the expansion of the network scale, for the purpose of utilizing network resources more effectively and realizing accessing more nodes on one network node, and thereby achieving a larger switching and forwarding capacity, there is a need to expand the capacity of the data forwarding plane. The current switching network generally adopts a 3-stage Clos switching network structure as shown in Figure 2. In the network structure, one switching chassis is used for realizing cascading of multiple line card chassis. One line card chassis includes one data forwarding plane as shown in Figure 1. The switching structure of a Clos switching network is layered into three stages. The first stage is an input stage (Stage1, hereinafter marked as S1). The second stage is a central stage (Stage2, hereinafter marked as S2). The third stage is an output stage (Stage3, hereinafter marked as S3). The switching network board located in the line card chassis is called an S1/S3 switching network board configured with an S1/S3 switching chip; the switching network board located in the switching chassis is called an S2 switching network board configured with an S2 switching chip. The S1/S3 switching network board in the line card chassis is configured thereon with a cascading interface connected to the S2 switching network board in the switching chassis. The switching chassis in which the S2 switching network board is located is responsible for the data switching among four cascaded line card chassis. In practice, the switching chassis may cascade more line card chassis. Besides, the 3-stage Clos switching network shown in Figure 2 is also a multi-plane structure with 3 switching planes shown in the Figure. In practice, more switching planes may exist, each including one S2 switching network board and four S1/S3 switching network boards.

In the system shown in Figure 2, if a communication is performed between the line cards in a current line card chassis, a line card sends the data packet to the S1 switching chip of an S1/S3 switching network board in the current line card chassis according to the load balancing principle. Because the data may not be transported directly between the S1 switching chip and S3 switching chip, the S1 switching chip sends the received data packet to the S2 switching chip on an S2 switching network board of the switching chassis. The S2 switching chip sends the data packet to an S3 switching chip of the current line card chassis. The S3 switching chip sends the data packet to another line card in the current line card chassis according to a destination address.

If the communication is performed between the line card in the current line card chassis and the line card in other line card chassis, the data forwarding process includes: The line card in the current line card chassis sends the data packet to an S1 switching chip in the current line card chassis. After receiving the data packet, the S1 switching chip sends the data packet to an S2 switching chip in the switching chassis. The S2 switching chip sends the data packet to the S3 switching chip of the line card chassis in which the destination line card is located. The S3 switching chip sends the data packet to the destination line card according to the destination address.

The inventor has found during the research that although the above networking mode may realize the capacity expansion, a series of problems still exist. In particular, all the line card chassis are connected to the switching chassis, so as to perform the data forwarding by the switching chassis. Once a failure occurs to the switching chassis, the entire system may crash. Therefore, the system is in a low reliability. Moreover, there is a need to add the switching chassis when expanding to multiple line card chassis, and especially when only a few line card chassis need to be cascaded, the adding of the switching chassis results in a high cost.

### SUMMARY

Embodiments of the present invention mainly provides a method and system of data communication, switching network board to reduce the networking complexity, save the networking cost and enhance the system reliability in the case that only a few line card chassis are cascaded.

A data communication system provided in the embodiment of the present invention includes multiple line card chassis. Each of the line card chassis includes multiple line cards, at least one switching chip and at least one relay chip. The line card is respectively connected to the switching chip and the relay chip of the same line card chassis. The switching chip of one line card chassis is connected to the relay chip of at least one of other line card chassis. The relay chip of the one line card chassis is connected to the switching chip of the at least one of other line card chassis.

The embodiment of the present invention provides a switching network board including the switching chip and the relay chip.

The switching chip is adapted to receive the message containing the destination address, and switch the message to the destination card or the relay chip according to the destination address.

The relay chip is adapted to relay the message to the switching chip of another switching network board.

The embodiment of the present invention provides a data communication method. The method includes:

receiving a message containing a destination address;

and sending the message to the destination card corresponding to the destination address or the relay chip of the line card chassis in which the destination line card is located, according to the destination address.

By implementing the above embodiments of the present invention, the networking complexity may be reduced, and the networking cost may be saved in the case that a few line card chassis are cascaded. Besides, when a failure occurs on a line card chassis, the chip configured in other line card chassis is adopted to ensure the normal operation of the system and avoid the situation in which the network fails to operate once a failure occurs on the switching chassis, thereby enhancing the system reliability.

### BRIEF DESCRIPTION OF THE DRAWINGS

Figure 1 is a structural schematic view illustrating the data forwarding plane in the prior art;

Figure 2 is a structural schematic view illustrating the 3-stage Clos switching network in the prior art;

Figure 3 is a structural schematic view illustrating the system in the case of two single-plane line card chassis cascaded in accordance with the embodiment of the present invention;

Figure 4 is a structural schematic view illustrating the system in the case of two multi-plane line card chassis cascaded in accordance with the embodiment of the present invention;

Figure 5 is a structural schematic view illustrating the system in the case of three line card chassis cascaded in accordance with the embodiment of the present invention;

Figure 6 is another structural schematic view illustrating the system in the case of three line card chassis cascaded in accordance with the embodiment of the present invention;

Figure 7 is a flowchart illustrating one embodiment of the data communication method in accordance with the present invention;

Figure 8 is a flowchart illustrating another embodiment of the data communication method in accordance with present invention;

Figure 9 is a flowchart illustrating implementation of the data communication by utilizing the system shown in the Figure 5 in accordance with an embodiment of the present invention; and

Figure 10 is a flowchart illustrating implementation of the data communication by utilizing the system shown in the Figure 6 in accordance with an embodiment of the present invention.

### DETAILED DESCRIPTION

The present invention is further illustrated below in combination with the accompanying drawings and particular embodiments, which are not to be construed as limiting the present invention.

In order to make those skilled in the art better understand technical schemes of the embodiments of the present invention, in all the following detailed embodiments, the source line card is the line card sending the message, the destination line card is the line card receiving the message, the destination address is the address corresponding to the destination line card, and the current line card chassis is the line card chassis in which the source line card is located.

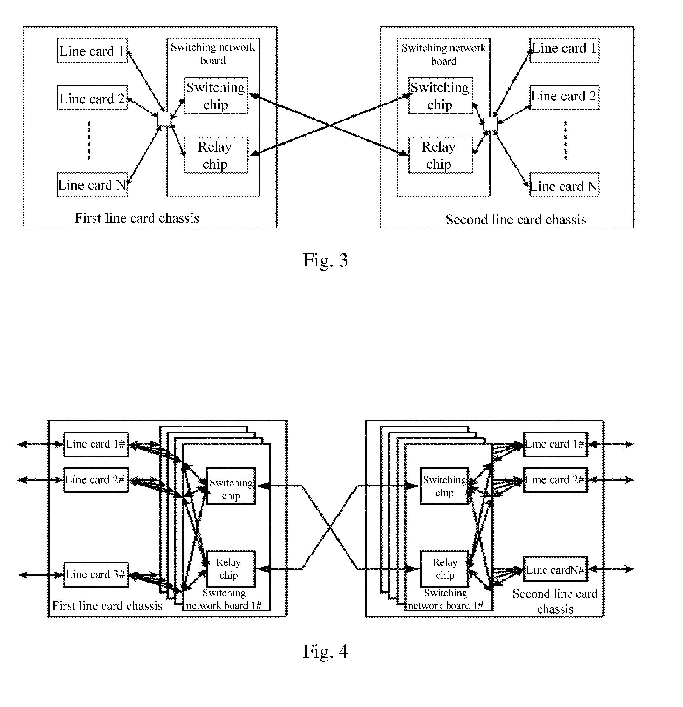

Figure 3 is a structural schematic view illustrating the system in the case of two single-plane line card chassis cascaded in accordance with the embodiment of the present invention is shown. A biggest difference between the system and the system in the prior art lies in the omission of the switching chassis. The system includes a first line card chassis and a second line card chassis, each including N (N is larger than or equal to 1) line cards and one switching network board. Each switching network board includes at least one switching chip and one relay chip. The relay chip is adapted to relay the message to the destination line card corresponding to the destination address. The switching chip is adapted to switch the message to the destination address or a corresponding relay chip according to the destination address of the message. N line cards in each line card chassis are respectively connected to each switching chip and each relay chip in the current line card chassis in all connecting manners conceivable by those skilled in the art. (For example, the line card is directly connected to the switching chip and the relay chip directly or is connected to the switching chip and the relay chip via the interface between the line card and the switching network board). The switching chip of the first line card chassis is connected to the relay chip of the second line card chassis, and the switching chip of the second line card chassis is connected to the relay chip of the first line card chassis in all connecting manners conceivable by those skilled in the art (For example, the switching chip is connected to the relay chip in different line card chassis directly or via the interface between the switching network boards).

When multiple switching planes are added in each line card chassis in the system shown in Figure 3, a schematic structural view of a system when two multi-plane line card chassis are cascaded as shown in Figure 4 is formed. In the system shown in Figure 4, similarly, a full connection needs to be realized between the line cards in each line card chassis and the switching chips and the relay chips in the current line card chassis in all manners conceivable by those skilled in the art. The full connection is realized between all the switching chips in the first line card chassis and all the relay chips in the second line card chassis, and between all the relay chips in the first line card chassis and all the switching chips in the second line card chassis in all manners conceivable by those skilled in the art.

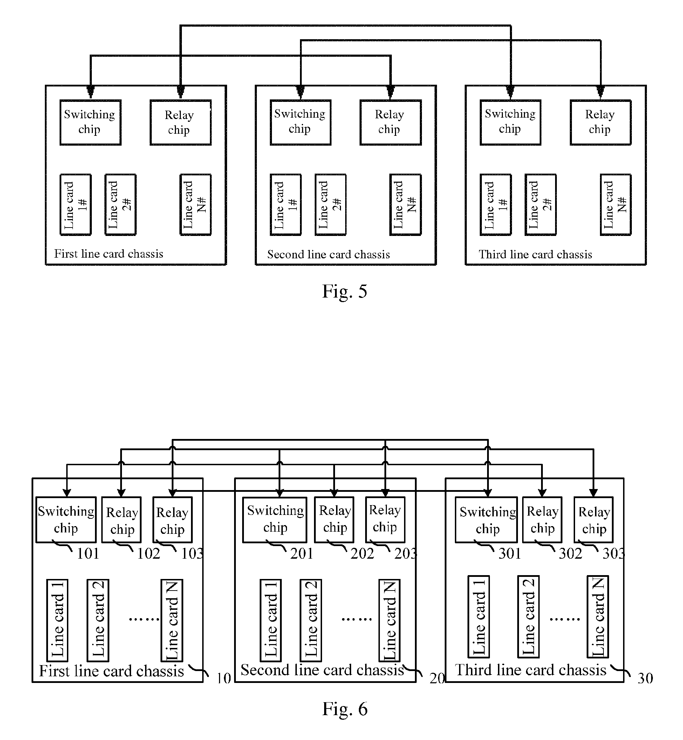

Figure 5 is a structural schematic view illustrating the system in the case of three line card chassis cascaded in accordance with the embodiment of the present invention. The line card chassis in Figure 5 may be the single-plane line card chassis shown in Figure 3 or the multi-plane line card chassis shown in Figure 4. A full connection is realized between line cards in each line card chassis and the switching chips and the relay chips in the current line card chassis. The switching chip in each line card chassis is connected to the relay chip in another line card chassis instead of being connected to the relay chips of all other line card chassis.

The switching chip is adapted to send the message to the destination line card, the relay chip of the current line card chassis, or the relay chip of other line card chassis connected to the switching chip according to the destination address of the message.

The relay chip is adapted to send the message from the source line card or the switching chip of the current line card chassis to the switching chip of other line card chassis connected to the relay chip and send the message from the switching chip of other line card chassis to the destination line card.

Particularly, the switching chip includes the first judgment module and the second judgment module.

The first judgment module is adapted to judge whether the destination line card is located in the current line card chassis according to the destination address of the message and send the message to the destination line card or the second judgment module according to the judgment result. If the destination line card is located in the current line card chassis, the message is sent to the destination line card; if the destination line card is not located in the current line card chassis, the first judgment module sends the message to the second judgment module.

The second judgment module is adapted to judge whether the switching chip is connected to the line card chassis in which the destination line card is located and send the message to the relay chip of the line card chassis in which the destination line card is located or the relay chip of the current line card chassis according to the judgment result. If the switching chip is connected to the line card chassis in which the destination line card is located, the second judgment module sends the message to the relay chip of the line card chassis in which the destination line card is located; if the switching chip is not connected to the line card chassis in which the destination line card is located, the second judgment module sends the message to the relay chip of the current line card chassis.

Preferably, a judgment module and a load balancing module are arranged in the system shown in Figures 3, 4, and 5 in the embodiments of the present invention. The judgment module is adapted to judge whether the destination address of the message is located in the same line card chassis as the source address. The load balancing module is adapted to send the message forwarded by a receiving module to the switching chip or the relay chip according to the destination address and the load balancing principle.

Figures 3, 4, and 5 are all structural schematic views of systems in which switching network boards support single-stage switching mode and relay mode, but the present invention is not limited thereto. The switching chip and the relay chip of the present invention may be connected to the switching chassis of the prior art. The relay chip connected to the switching chassis functions as the switching chip does. For example, in order to realize the compatibility with the prior art, the switching chip and the relay chip may be switched into an operation mode of the S1/S3 switching chip to achieve the compatibility with a single board and 3-stage, 4-stage, or more stage switching. Because the switching chassis is not required, the capacity expansion of the system is facilitated, and services will not be interrupted during the capacity expansion of the system.

Figure 6 is another structural schematic view illustrating the system in the case of three line card chassis cascaded in accordance with the embodiment of the present invention. The difference between the system and that shown in Figure 5 lies in that, each line card chassis in the system includes one switching chip and two relay chips. The connection of each switching chip and each relay chip is: The switching chip of one line card chassis is respectively connected to the relay chips of other line card chassis; and the relay chip of one line card chassis is respectively connected to the switching chips of other line card chassis.

As shown in Figure 6, a switching chip 101 in a first line card chassis 10 is connected to a relay chip 202 in a second line card chassis 20 and a relay chip 302 in a third line card chassis 30. A switching chip 201 in the second line card chassis 20 is connected to a relay chip 102 in the first line card chassis 10 and a relay chip 303 in the third line card chassis 30. a switching chip 301 in the third line card chassis 30 is connected to a relay chip 103 in the first line card chassis 10 and a relay chip 203 in the second line card chassis 20.

The switching chip is adapted to send the message to the destination line card or the relay chip of the line card chassis in which the destination line card is located according to the destination address of the message.

The relay chip is adapted to send the message from the source line card to the switching chip of other line card chassis connected to the relay chip or send the message from the switching chip of other line card chassis to the destination line card.

Particularly, the switching chip includes a third judgment module.

The third judgment module is adapted to judge whether the destination line card is located in the current line card chassis according to the destination address of the message, and send the message to the destination line card or the relay chip of other line card chassis in which the destination line card is located according to the judgment result. If the destination line card is located in the current line card chassis, the third judgment module sends the message to the destination line card; if the destination line card is not located in the current line card chassis, the third judgment module sends the message to the relay chip of the line card chassis in which the destination line card is located.

A switching network board is further provided in the embodiments of the present invention. The switching network board includes a relay chip, a switching chip, a judgment module, and a load balancing module. The relay chip is adapted to relay the message to the destination address or the switching chip of other switching network board. The switching chip of the switching network board is adapted to switch the message to the destination address or the corresponding relay chip according to the destination address of the message. The judgment module is adapted to judge whether the destination address of the message is located in the same line card chassis as the source address. The load balancing module is adapted to send the message to the switching chip or the relay chip according to the destination address thereof and the load balancing principle based on the judgment result of the judgment module.

A data communication method is further provided in the embodiments of the present invention. The data communication method includes: receiving the message containing the destination address; and sending the message to the destination line card corresponding to the destination address or the relay chip of the line card chassis in which the destination line card is located according to the destination address.

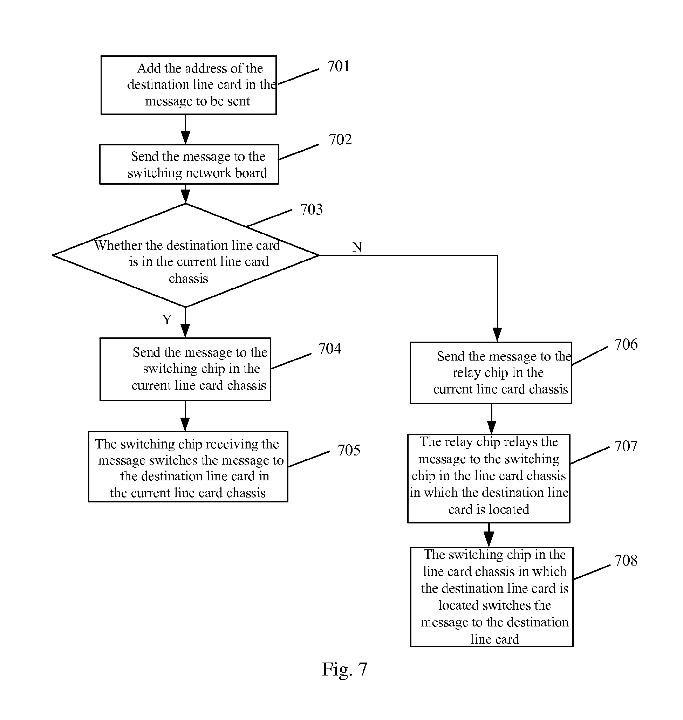

A flowchart illustrating one embodiment of the data communication method by utilizing the systems shown in Figure 3, 4, or 5 in accordance with the embodiment of the present invention is shown in Figure 7. The method includes:

Block 701: The address of the destination line card is added in the message to be sent by the source line card, i.e., the destination address is added in the message to be sent.

Before this block, generally, a routing table is created at a corresponding position in the switching network board or the line card chassis to realize the forwarding of the message according to the network protocol or the destination address of the message.

Block 702: The source line card sends the message to the switching network board in the current line card chassis.

In the single-plane data communication system shown in Figure 3, the source line card directly sends the message to the switching network board in the current line card chassis. However, in the system shown in Figure 4 or 5, the source line card may also send the message to an apparatus responsible for load balancing, and the apparatus responsible for load balancing sends the message to a corresponding switching network board according to a principle.

Block 703: The switching network board judges whether the destination line card is in the current line card chassis according to the destination address of the message, and if the destination line card is in the current line card chassis, the process proceeds to block 704; if the destination line card is not in the current line card chassis, the process proceeds to block 706.

Block 704: The switching network board sends the message to the switching chip in the current line card chassis according to the destination address of the message.

In general, preferably, the switching network board sends the message to the switching chip of its own according to the destination address of the message and the load balancing principle.

Block 705: The switching chip receiving the message switches the message to the destination line card according to the destination address of the message, and this process ends.

Block 706: The switching network board sends the message to the relay chip in the current line card chassis.

In general, the switching network board sends the message to the relay chip of its own according to the destination address of the message and the load balancing principle.

Block 707: The relay chip receiving the message relays the message to the switching chip in the line card chassis in which the destination line card is located.

The relay chip receiving the message may directly relay the message to the switching chip in the line card chassis in which the destination line card is located or relay the message to switching chip in the line card chassis in which the destination line card is located via the switching network board in the line card chassis in which the destination line card is located.

Block 708: The switching chip in the line card chassis in which the destination line card is located switches the message to the destination line card, and this process ends.

Data switching between different line cards may be realized through the above blocks.

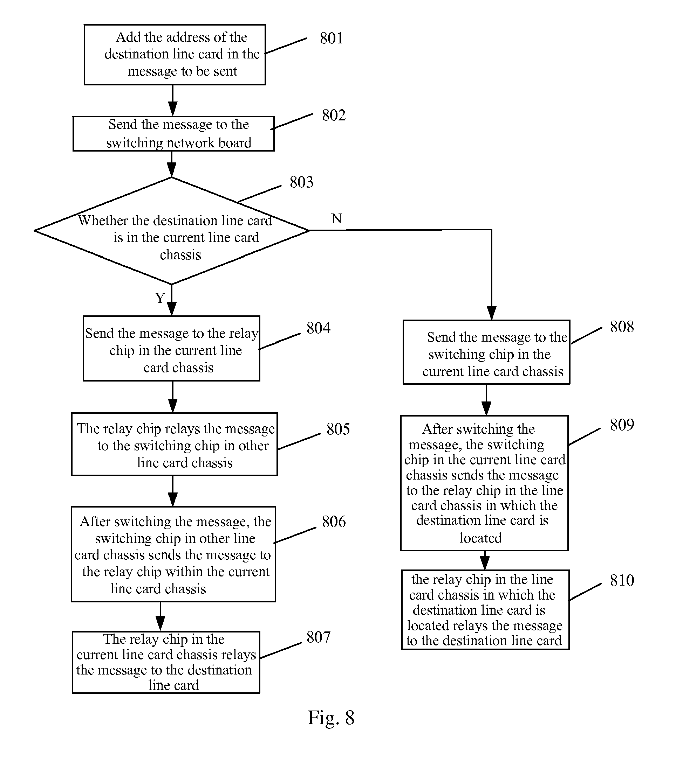

A flowchart illustrating another embodiment of the data communication method by utilizing the systems shown in Figure 3, 4, or 5 in accordance with the embodiment of the present invention is shown in Figure 8, which includes:

Block 801: The address of the destination line card is added in the message to be sent by the source line card, i.e., the destination address is added in the message to be sent.

Before this block, generally, an address table should be created at the corresponding position in the switching network board or the line card chassis to realize the data switching.

Block 802: The source line card sends the message to the switching network board in the current line card chassis.

In the single-plane data communication system shown in Figure 3, the source line card directly sends the message to the switching network board in the current line card chassis. However, in the system shown in Figure 4 or 5, the source line card may also first send the message to the apparatus responsible for load balancing, and the apparatus responsible for load balancing sends the message to the corresponding switching network board according to the principle.

Block 803: The switching network board judges whether the destination line card is in the current line card chassis according to the destination address of the message, and if the destination line card is in the current line card chassis, the process proceeds to block 804; if the destination line card is not in the current line card chassis, the process proceeds to Block 808.

Block 804: The switching network board sends the message to the relay chip in the current line card chassis according to the destination address of the message.

In general, preferably, the switching network board sends the message to the relay chip of its own according to the destination address of the message and the load balancing principle.

Block 805: The relay chip receiving the message relays the message to the switching chip in other line card chassis according to the destination address of the message.

In general, preferably, the relay chip receiving the message should relay the message to the switching chip in the line card chassis in which the destination line card is located. Obviously, the relay chip receiving the message may also relay the message to other switching chips capable of being connected to the line card chassis in which the destination line card is located.

Block 806: After switching the message, the switching chip in other line card chassis receiving the message sends the message to the relay chip in the current line card chassis.

Preferably, after switching the message, the switching chip in the current line card chassis sends the message to the relay chip in the current line card chassis.

Block 807: The relay chip in the current line card chassis receiving the message relays the message to the destination line card, and this process ends.

Block 808: The switching network board sends the message to the switching chip in the current line card chassis.

In general, preferably, the switching network board sends the message to the switching chip of its own according to the destination address of the message and the load balancing principle.

Block 809: After switching the message, the switching chip receiving the message sends the message to the relay chip in other line card chassis.

In general, preferably, the switching chip receiving the message should switch the message to the relay chip in the line card chassis in which the destination line card is located. Obviously, the switching chip receiving the message may also switch the message to other relay chips capable of being connected to the line card chassis in which the destination line card is located.

Block 810: The relay chip in other line card chassis receiving the message relays the message to the destination line card, and this process ends.

Preferably, the relay chip in the line card chassis in which the destination line card is located relays the message to the destination line card.

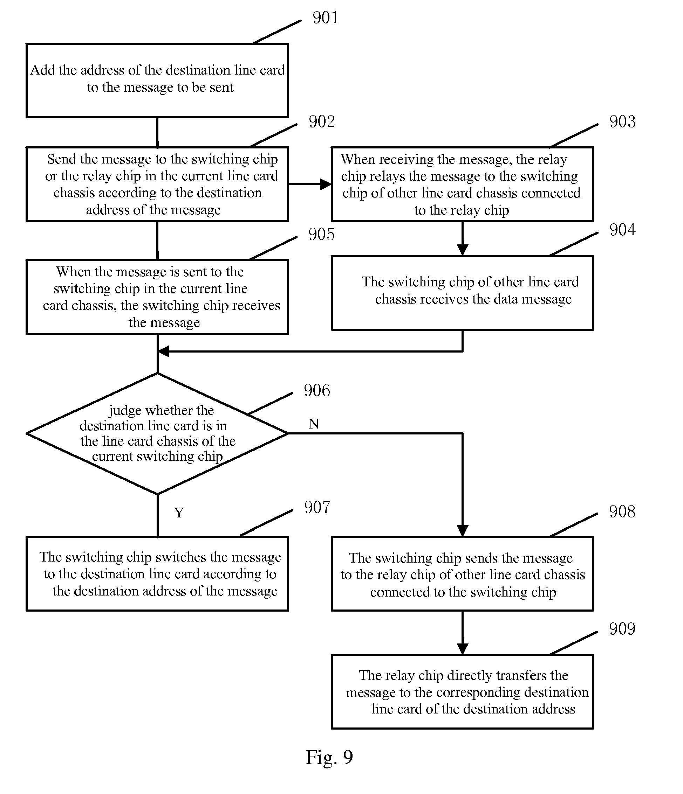

A flowchart illustrating implementation of the data communication by utilizing the system shown in Figure 5 in accordance with an embodiment of the present invention is shown in Figure 9, which includes:

Block 901: The address of a destination line card is added in the message to be sent by the source line card, i.e., the destination address is added in the message to be sent.

Block 902: The source line card sends the message to the switching chip or the relay chip connected to the line card chassis in which the destination address is located according to the destination address. If the switching chip of the current line card chassis is not connected to the line card chassis in which the destination address is located, the source line card sends the message to the relay chip of the current line card chassis, and the process proceeds to block 903. If the switching chip of the current line card chassis is connected to the line card chassis in which the destination address is located, the source line card sends the message to the switching chip in the current line card chassis, and the process proceeds to block 905.

For example, in the system shown in Figure 5 according to the embodiment of the present invention, if the line card 1 (i.e., the source line card) of the first line card chassis needs to send the message to the line card 2 (i.e., the destination line card) of the second line card chassis, since the switching chip of the first line card chassis is connected to the relay chip of the second line card chassis, the line card 1 of the first line card chassis sends the message to the switching chip of the first line card chassis according to the destination address of the line card 2 of the second line card chassis. If the line card 1 (i.e., the source line card) of the first line card chassis needs to send the message to the line card 3 (i.e., the destination line card) of the third line card chassis, since the switching chip of the first line card chassis is not connected to the relay chip of the third line card chassis, the line card 1 of the first line card chassis sends the message to the relay chip of the first line card chassis according to the destination address of the line card 3 of the third line card chassis.

Block 903: When the source line card sends the message to the relay chip in the line card chassis in which the source line card is located, the relay chip receives the message and relays the message to the switching chip of other line card chassis connected to the relay chip.

For example, in the system shown in Figure 5 in accordance with the embodiment of the present invention, the line card 1 of the first line card chassis sends the message to the relay chip of the first line card chassis according to the destination address of the line card 3 of the third line card chassis, and the relay chip of the first line card chassis sends the message to the switching chip of the third line card chassis.

Block 904: The switching chip of other line card chassis receives the message, and the process proceeds to block 906.

Block 905: When the source line card sends the message to the switching chip of the current line card chassis, the switching chip of the current line card chassis receives the message.

Block 906: The switching chip currently receiving the message judges whether the destination line card is in the line card chassis in which the switching chip receiving the message is located according to the destination address of the message, and if the destination line card is in the line card chassis in which the switching chip receiving the message is located, the process proceeds to block 907; if the destination line card is not in the line card chassis in which the switching chip receiving the message is located, the process proceeds to block 908.

Block 907: The switching chip receiving the message switches the message to the destination line card according to the destination address of the message, and then this process ends.

Block 908: The switching chip receiving the message sends, according to the destination address of the message, the message to the relay chip of other line card chassis connected to the switching chip.

Block 909: The relay chip of other line card chassis receiving the message directly sends the message to the destination line card, and then this process ends.

Data switching between different line cards may be realized through the above blocks.

In the technical scheme of the embodiment, the source line card judges the sending path of the message according to the destination address of the message. That is, the source line card judges the message should be sent to the switching chip or the relay chip of the line card chassis in which the source line card is located according to the destination address of the message to realize the data switching between different line cards. In addition, an alternative technical scheme may be adopted as follows. The source line card may send all the messages to the switching chip of the current line card chassis. The switching chip of the current line card chassis judges the sending paths of the messages according to the destination addresses of the messages. If the destination line card is located in the current line card chassis, the switching chip of the current line card chassis forwards the message to the destination line card of the current line card chassis. If the destination line card is not located in the current line card chassis, the switching chip of the current line card chassis further judges whether the switching chip of the current line card chassis is connected to the line card chassis in which the destination address is located. If the switching chip of the current line card chassis is connected to the line card chassis in which the destination line card is located, the switching chip of the current line card chassis sends the message to the relay chip of the line card chassis in which the destination line card is located, and the relay chip of the line card chassis in which the destination line card is located sends the message to the destination line card. If the switching chip of the current line card chassis is not connected to the line card chassis in which the destination line card is located, the switching chip of the current line card chassis forwards the message to the relay chip of the current line card chassis, the relay chip forwards the message to the switching chip of other line card chassis connected to the relay chip of the current line card chassis, and the switching chip of other line card chassis sends the message to the destination line card.

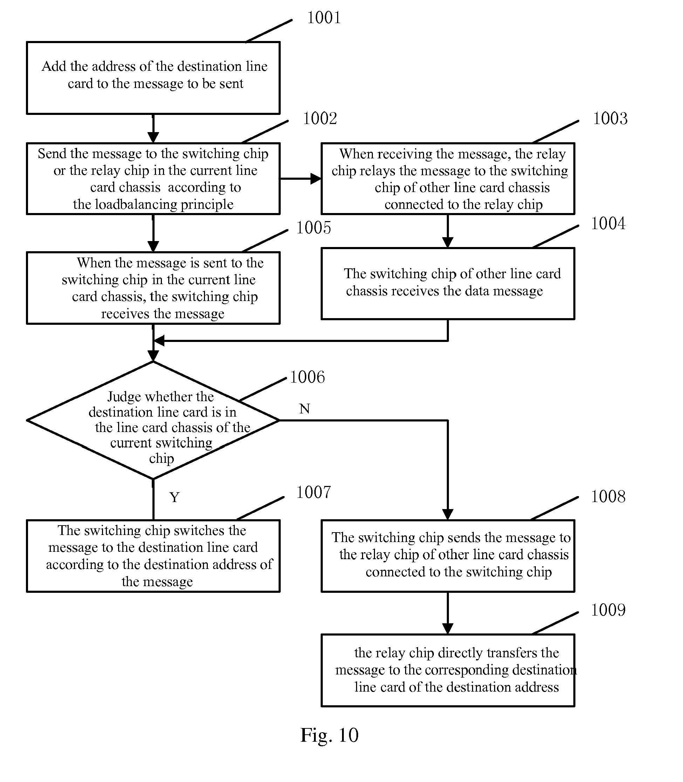

A flowchart illustrating implementation of the data communication by utilizing the system shown in Figure 6 in accordance with an embodiment of the present invention is shown in Figure 10, which includes:

Block 1001: The address of the destination line card is added in the message to be sent by the source line card, i.e., the destination address is added in the message to be sent.

Block 1002: The source line card sends the message to the switching chip or the relay chip in the current line card chassis according to the load balancing principle. When the source line card sends the message to the relay chip in the current line card chassis, the process proceeds to block 1003. When the source line card sends the message to the switching chip in the current line card chassis, the process proceeds to block 1005.

Block 1003: When the source line card sends the message to the relay chip in the current line card chassis, the relay chip receives the message, and relays the message to the switching chip of other line card chassis connected to the relay chip.

Block 1004: The switching chip of other line card chassis receives the message, and the process proceeds to block 1006.

Block 1005: When the source line card sends the message to the switching chip in the current line card chassis, the switching chip of the current line card chassis receives the message.

Block 1006: The switching chip currently receiving the message judges whether the destination line card is in the line card chassis in which the switching chip receiving the message is located according to the destination address of the message, and if the destination line card is in the line card chassis in which the switching chip receiving the message is located, the process proceeds to block 1007; if the destination line card is not in the line card chassis in which the switching chip receiving the message is located, the process proceeds to block 1008.

Block 1007: The switching chip receiving the message switches the message to the destination line card according to the destination address of the message, and then this process ends.

Block 1008: The switching chip receiving the message sends the message to the relay chip of other line card chassis connected to the switching chip according to the destination address of the message.

Block 1009: The relay chip of other line card chassis receiving the message directly forwards the message to the corresponding destination line card of the destination address, and then this process ends.

Data switching between different line cards may be realized through the above blocks.

In all the above embodiments of the present invention, the switching chips and the relay chips of the same line card chassis may be integrated on the same switching network board. Or, the switching chips and the relay chips of the same line card chassis may be integrated respectively as a functional module on the same chip. The integrated switching network board or chip has both functions of forwarding and relaying the message data.

By implementing the above embodiments of the present invention, in the case that a few line card chassis are cascaded, the networking complexity may be reduced, the networking cost may be saved, and the situation in the prior art in which the network fails to operate once the failure occurs to the switching chassis may be avoided, thus enhancing the system reliability.

Though the exemplary implementations of the present invention have been described above, they are not intended to limit the present invention. Any ordinary substitutions and variations made within the scope of the embodiments of the present invention by those skilled in the art should fall within the scope of the present invention.

## Claims

1. A data communication system, comprising multiple line card chassis; each of the line card chassis comprising multiple line cards, at least one switching chip and at least one relay chip; wherein
the line card is respectively connected to the switching chip and the relay chip of the same line card chassis;
the switching chip of one line card chassis is connected to the relay chip of at least one of other line card chassis; and
the relay chip of one line card chassis is connected to the switching chip of at least one of other line card chassis.

2. The data communication system according to claim 1, wherein the switching chip is adapted to send a message to a destination line card or the relay chip of the line card chassis in which the destination line card is located according to a destination address of the message.

3. The data communication system according to claim 1 or 2, wherein the switching chip comprises a first judgment module and a second judgment module; wherein
the first judgment module is adapted to judge whether the destination line card is located in a current line card chassis according to the destination address of the message, and send the message to the destination line card or the second judgment module according to a judgment result; and
the second judgment module is adapted to judge whether the switching chip is connected to the line card chassis in which the destination line card is located, and send the message to the relay chip of the line card chassis in which the destination line card is located or the relay chip of the current line card chassis according to the judgment result.

4. The data communication system according to claim 3, wherein the relay chip is adapted to send the message from a source line card or the switching chip of the current line card chassis to the switching chip of other line card chassis connected to the relay chip; and send the message from the switching chip of other line card chassis to the destination line card.

5. The data communication system according to claim 1 or 2, wherein the switching chip of one line card chassis is respectively connected to the relay chips of other line card chassis; and the relay chip of one line card chassis is respectively connected to the switching chips of the other line card chassis.

6. The data communication system according to claim 5, wherein the switching chip comprises:
a third judgment module adapted to judge whether the destination line card is located in the current line card chassis according to the destination address of the message, and send the message to the destination line card or the relay chip of other line card chassis in which the destination line card is located according to a judgment result.

7. The data communication system according to claim 6, wherein the relay chip is adapted to send the message from the source line card to the switching chip of other line card chassis connected to the relay chip, or send the message from the switching chip of other line card chassis to the destination line card.

8. A switching network board, comprising:
a switching chip adapted to receive a message containing a destination address and switch the message to a line card or a relay chip according to the destination address; and
a relay chip adapted to relay the message to the switching chip of other switching network board.

9. A data communication method, comprising:
receiving a message containing a destination address; and
sending the message to a destination line card corresponding to the destination address or a relay chip of a line card chassis in which the destination line card is located according to the destination address.

10. The data communication method according to claim 9, wherein the sending the message to the destination line card corresponding to the destination address or the relay chip of the line card chassis in which the destination line card is located according to the destination address comprises:
judging whether the destination line card is in the line card chassis in which a switching chip receiving the message is located according to the destination address of the message, and if the destination line card is in the line card chassis in which the switching chip receiving the message is located, sending the message to the destination line card according to the destination address of the message; if the destination line card is not in the line card chassis in which the switching chip receiving the message is located, sending the message to the relay chip of other line card chassis connected to the switching chip receiving the message according to the destination address of the message, and sending, by the relay chip of the other line card chassis, the message to the destination line card.

11. The data communication method according to claim 10, before the receiving the message containing the destination address, further comprising:
adding, by a source line card, the destination address into the message to be sent, and sending the message to the switching chip or the relay chip of a current line card chassis according to the destination address and a load balancing principle.

12. The data communication method according to claim 11, after the sending the message to the switching chip or the relay chip of the current line card chassis according to the destination address and the load balancing principle, further comprising:
sending, by the relay chip of the current line card chassis, the message to the switching chip of other line card chassis connected to the relay chip of the current line card chassis when the source line card sends the message to the relay chip of the current line card chassis.

13. The data communication method according to claim 9, before the receiving the message containing the destination address, further comprising:
adding, by the source line card, the destination address into the message to be sent, and sending the message to the switching chip of the current line card chassis.

14. The data communication method according to claim 13, wherein the sending the message to the destination line card corresponding to the destination address or the relay chip of the line card chassis in which the destination line card is located according to the destination address contained in the message comprises:
judging, by the switching chip of the current line card chassis, whether the destination line card is located in the current line card chassis according to the destination address of the message, and if the destination line card is located in the current line card chassis, sending the message to the destination line card; if the destination line card is not located in the current line card chassis, further judging whether the switching chip is connected to the line card chassis in which the destination line card is located and sending the message to the relay chip of the line card chassis in which the destination line card is located or the relay chip of the current line card chassis according to a judgment result.

15. The data communication method according to claim 14, wherein the sending the message to the relay chip of the line card chassis of the destination line card or the relay chip of the current line card chassis according to the judgment result comprises:
sending the message to the relay chip of the line card chassis in which the destination line card is located, and sending, by the relay chip of the line card chassis in which the destination line card is located, the message to the destination line card if the switching chip of the current line card chassis is connected to the line card chassis in which the destination line card is located; and
sending the message to the relay chip of the current line card chassis, and sending, by the relay chip of the current line card chassis, the message to the switching chip of the line card chassis in which the destination line card is located if the switching chip of the current line card chassis is not connected to the line card chassis in which the destination line card is located.

16. The data communication method according to claim 10, before the receiving the message containing the destination address, further comprising:
adding, by the source line card, the destination address into the message to be sent, and sending the message to the switching chip or the relay chip of the current line card chassis according to the load balancing principle.

17. The data communication method according to claim 16, after the sending the message to the switching chip or the relay chip of the current line card chassis according to the load balancing principle, comprising:
sending, by the relay chip of the current line card chassis, the message to the switching chip of other line card chassis connected to the relay chip of the current line card chassis when the source line card sends the message to the relay chip of the current line card chassis.
